# EUROPEAN PATENT APPLICATION

(11) **EP 1 801 051 A1**
(43) Date of publication of application: **27.06.2007**
(21) Application number: 06255850.7
(22) Date of filing: 15.11.2006
(51) Int. Cl.: B65G 69/18, B65D 90/62

(54) **Closure assembly for a store of flowable material**

(30) Priority: 23.12.2005 GB 0526278
(71) Applicant: Semenenko, Ivan, Moreton-in-Marsh, GL56 OPE (GB)
(72) Inventor: Semenenko, Ivan, Moreton-in-Marsh, GL56 OPE (GB)
(74) Representative: Hocking, Adrian Niall

(57) **Abstract**

Apparatus (10) for receiving the discharge of flowable material from a store thereof, comprises a hollow support member (16), a through-flow device (18) frictionlessly or substantially frictionlessly slidable within the hollow support member (16) and into which material from the store can flow, and fluid actuation means for moving the through-flow device (18) relative to the hollow support member (16).

The fluid actuation means comprises a variable volume chamber (56) into and out of which fluid can flow in order to move the through-flow device, and a rolling seal (60) for preventing undesirable escape of the fluid from the variable volume chamber (56).

The in use rolling seal (60) rolls without sliding as the through-flow device (18) moves, so that frictionless or substantially frictionless movement of the through-flow device (18) occurs.

## Description

The present invention relates to material handling apparatus for receiving the discharge of flowable material from a store thereof, such as a silo or an intermediate bulk container (IBC).

Apparatus for receiving the discharge of flowable material is known, for example from EP1038802 which comprises a through-flow device slidably mounted within a hollow support member, a closure device which opens and closes the through-flow device, and a closure operating member for opening the closure device. An actuator, in the form of an inflatable and deflatable toroidal element, is provided between the hollow support member and the through-flow device to raise and lower the through-flow device. As the through-flow device is raised, the closure operating member operates and the closure device is opened, thereby allowing material to flow into the through-flow device. To maintain flow, and to prevent clogging and jamming of the material, the inflatable / deflatable toroidal element is 'pulsed' to rapidly move or vibrate the through-flow device.

However, a problem with the use of an inflatable and deflatable actuator element is one of friction. As the actuator is continuously inflated and deflated, and also when 'pulsed', friction occurs where it contacts the surfaces of the hollow support member and the through-flow device. This leads to abrasion of the actuator element, and consequently a significantly reduced working life.

Furthermore, the abrasion of the actuator element, which is typically formed of rubber, results in the depositing of numerous rubber particles in the space between the hollow support member and the through-flow device. This can lead to contamination of the outside environment. As a result, periodic dismantling, thorough cleaning, and replacement of the actuator element is required. This is time consuming, and means that the apparatus cannot be used during the maintenance period.

A further example of material handling apparatus is known from GB2084969. A major problem with this suggested arrangement is that the inflatable and deflatable actuator is constructed from strong reinforced material so as to withstand the high internal pressures, as it has no support therearound. During operation and contestant cycling, the actuator parts rub against each other and abrade, and the parts are constantly bending leading to the same problems as above and, additionally, potential contamination of the flowable material as the actuator is situated within the flowable material.

The presence of any type of discrete or separate actuator will lead to similar or additional problems. For example, another type of actuator in use is a pneumatic piston/cylinder arrangement. There are many moving, sliding parts which will also wear to create the same problems as in all of the above and in addition create further contamination of the flowable material with leaking water and oil contaminated air used to actuate the mechanism.

An additional problem also occurs in that, if sensors or mechanical stops controlling the movement of the through-flow device fail, the through-flow device and thus the closure operating member can be raised too high. This can cause the store, for example the silo or IBC, to be dislodged from the apparatus and potentially to fall off the apparatus. This is extremely hazardous.

Another problem is that the friction between the surfaces reduces the speed of movement and pulsing.

The present invention seeks to provide a solution to these problems.

According to the present invention, there is provided apparatus for receiving the discharge of flowable material from a store thereof, the apparatus comprising a hollow support member, a through-flow device frictionlessly or substantially frictionlessly slidable within the hollow support member and into which material from the store can flow, and fluid actuation means for moving the through-flow device relative to the hollow support member, the fluid actuation means comprising a variable volume chamber into and out of which fluid can flow in order to move the through-flow device, and a rolling seal for preventing undesirable escape of the fluid from the variable volume chamber and which rolls without sliding as the through-flow device moves, so that frictionless or substantially frictionless movement of the through-flow device occurs.

Preferable and/or optional features of the invention are set forth in claims 2 to 11, inclusive.

According to a second aspect of the invention, there is provided apparatus for receiving the discharge of flowable material from a store thereof, the apparatus comprising a hollow support member, a through-flow device slidable within the hollow support member and into which material from the store can flow, and fluid actuation means for moving the through-flow device frictionlessly or substantially frictionlessly relative to the hollow support member, the fluid actuation means comprising a variable volume chamber into and out of which fluid can flow in order to move the through-flow device, the variable volume chamber being defined by surfaces of the hollow support member and the through-flow device, so that frictionless or substantially frictionless movement of the through-flow device occurs.

The present invention will now be more particularly described, by way of example only, with reference to the accompanying drawings, in which :

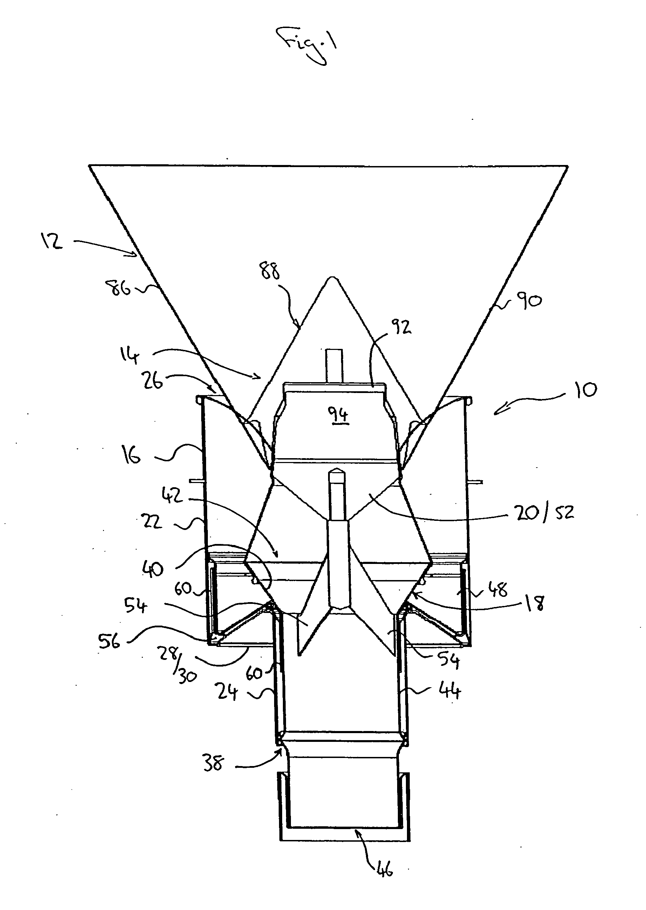

Figure 1 is a vertical cross-sectional view of one embodiment of material handling apparatus, in accordance with the present invention, and showing a through-flow device in a first at rest' condition within a hollow support member;
Figure 2 is an enlarged view of part of the apparatus shown in Figure 1, and showing part of a rolling seal interposed between the hollow support member and the through-flow device;
Figure 3 is a vertical cross-sectional view, similar to Figure 1, showing the through-flow device in a second partially raised condition;
Figure 4 is an enlarged view of part of the apparatus shown in Figure 3, and showing part of the rolling seal;
Figure 5 is a vertical cross-sectional view, again similar to Figure 1, but this time showing the through-flow device in a third over-raised condition;
Figure 6 is an enlarged view of part of the apparatus shown in Figure 5, and showing the rolling seal separated from its sealing surface, and thus venting.

Referring to the drawings, there is shown one embodiment of apparatus 10 for controlling the discharge of flowable material from a container 12, such as a silo or intermediate bulk container (IBC) having a valve 14 at its lower end.

The apparatus 10 comprises a hollow support member 16, a through-flow device 18 slidable within the hollow support member 16, a closure operating member 20 which is supported by and which is movable with the through-flow device 18, and fluid actuation means for raising and lowering the through-flow device 18 relative to the hollow support member 16.

The hollow support member 16 has outer and inner cylindrical tubular parts 22, 24 in which the through-flow device 18 moves. The outer tubular part 22 has a first upper opening 26 for receiving the valve 14 of the container 12, and an inwardly extending flange 28 which defines a first lower opening 30 which is of smaller diameter than the first upper opening 26.

The inner tubular part 24 includes a second upper opening 32, which includes an outwardly extending flange 34 which slopes downwardly away from the second upper opening 32 to define a lower frusto-conical surface 36, and a second lower opening 38. The inner tubular part 24 is received in the first lower opening 30 of the outer tubular part 22, and is supported via the downwardly sloping outwardly extending flange 34 of the inner tubular part 24 bearing against the inwardly extending flange 28 of the outer tubular part 22. The inner tubular part 24 thus projects downwardly from the outer tubular part 22.

The through-flow device 18 comprises an upper frusto-conical portion 40 which defines a material flow inlet 42, a lower cylindrical portion 44 which extends from the smaller diameter edge of the upper frusto-conical portion 40 and which defines a material flow outlet 46, and a guide element 48 which supports the frusto-conical portion 40.

The lower cylindrical portion 44 of the through-flow device 18 is slidably received as a close fit in the inner tubular part 24 of the hollow support member 16, and the guide element 48 is slidably received as a close fit in the outer tubular part 22 of the hollow support member 16. The guide element 48 includes an upper frusto-conical surface 50 complementarily or substantially complementarily shaped to match the lower frusto-conical surface 36 defined by the outwardly extending flange 34 of the inner tubular part 24 of the hollow support member 16.

The closure operating member 20 is in the form of an upstanding probe 52 secured to the through-flow device 18 by angled rods 54. The probe 52 projects from the through-flow device 18, through the material flow inlet 42.

The fluid actuation means comprises a chamber 56 which is positioned between the through-flow device 18 and the hollow support member 16, and which is thus not within the flow path of material moving through the apparatus 10.

The chamber 56 is defined between internal surfaces of the hollow support member 16 and exterior surfaces of the through-flow device 18, and includes one or more fluid ports 58 for the inflow and outflow of fluid, typically being air but which could be another gas or liquid, such as water. The height of the chamber 56 is variable, and corresponds to the position of the through-flow device 18.

The actuation means also includes a, typically rubber, tubular rolling seal 60 which extends partway around the chamber 56. The tubular rolling seal 60 has a thickness which is typically less than 5 mm, and preferably in the range of 0.5 mm to 3 mm. It has been found that a tubular rolling seal with a thickness of 2 mm operates well.

A first end 62 of the rolling seal 60 is secured beneath the outwardly extending flange 34 of the inner tubular part 24 of the hollow support member 16, and a second end 64 of the rolling seal 60 is secured to a, typically continuous, ring element 66.

The ring element 66 forms part of vent means for the chamber 56, and is freely slidably received about the through-flow device 18. The ring element 66 has a diameter which is slightly larger than the second upper opening 32 of the inner tubular part 24 of the hollow support member 16. As such, the ring element 66 is supported by the inner tubular part 24 of the hollow support member 16, adjacent to the second upper opening 32, and, in normal use, traps an end portion 68 of the rolling seal 60 against the inner tubular part 24 of the hollow support member 16.

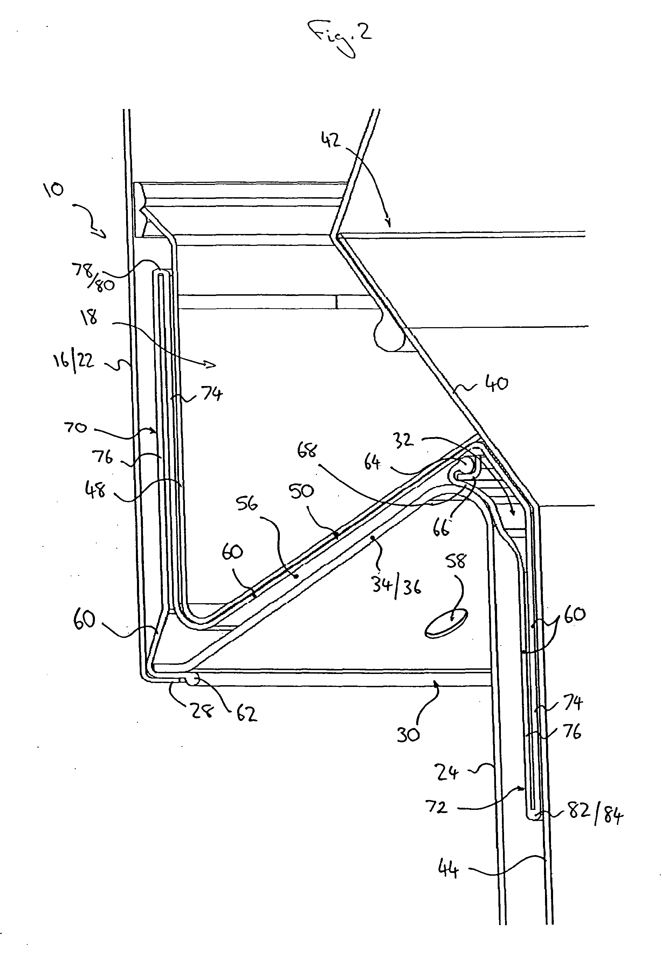

The ends 62, 64 of the tubular rolling seal 60 are folded back on themselves or reversed to form two portions 70, 72 of the rolling seal 60 having a double layer, as best understood from Figure 2.

The first double layer portion 70 is provided between opposing adjacent surfaces of the guide element 48 of the through-flow device 18 and the outer tubular part 22 of the hollow support member 16, and the second double layer portion 72 is provided between opposing adjacent surfaces of the inner tubular part 24 of the hollow support member 16 and the lower cylindrical portion 44 of the through-flow device 18.

Each double layer portion 70, 72 provides a first variable portion 74 which, at least in use, contacts the through-flow device 18, and a second variable portion 76 which, at least in use, contacts the hollow support member 16. A first fold 78 at the end of the first double layer portion 70 results in the chamber 56 having an upper seal boundary 80, and a second fold 82 at the end of the second double layer portion 72 results in the chamber 56 having a lower seal boundary 84.

The valve 14 of the store comprises a discharge opening defining means in the form of a hopper 86 and a closure device 88. The hopper 86 includes a downwardly tapered frusto-conical portion 90 at its lower end, and the closure device 88 is, typically, of double skinned, hollow construction.

The closure device 88 has a recess 92 in its lower surface. The recess 92 is shaped to receive an upper portion 94 of the probe 52 as a close or tight fit. The fit ensures that the closure device 88 does not tilt when the probe 52 is engaged therewith. It also forms a seal so that the underside of the closure device 88 and the upperside of the probe 52 remain dust free.

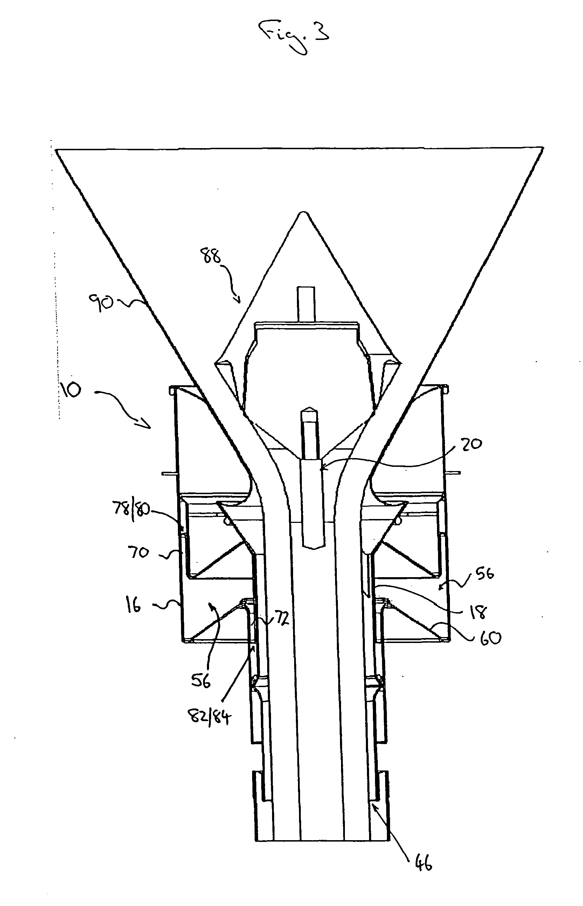

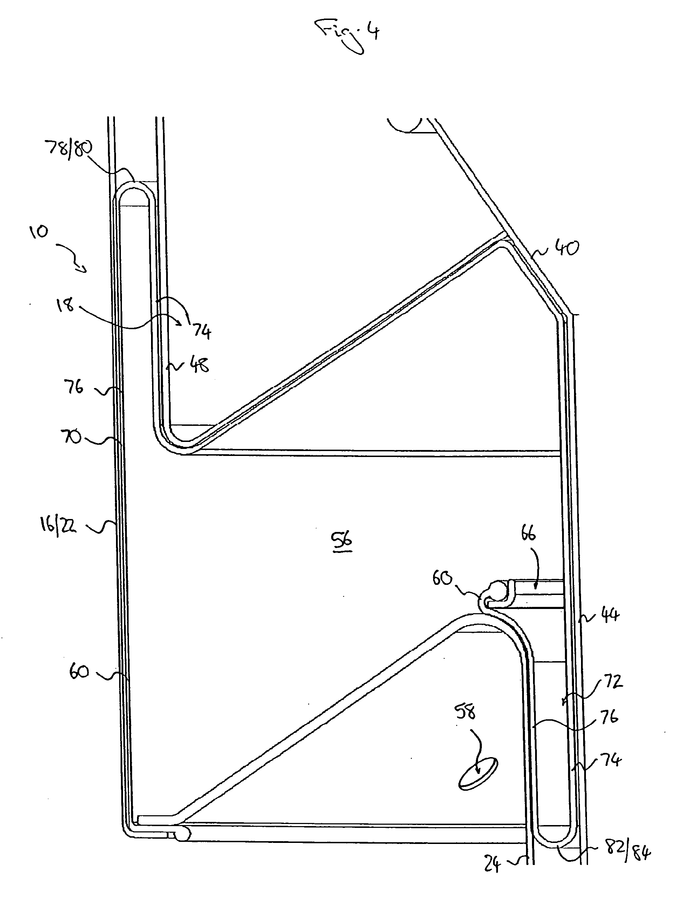

A fluid pumping circuit (not shown) is provided to control the fluid flow into and out of the chamber 56 of the actuation means. With the store located in the hollow support member 16, and the probe 52 received in the recess 92 of the valve 14, the fluid pumping circuit is activated to pump fluid into the chamber 56. The inflowing fluid causes the rolling seal 60 to press and thus seal against the adjacent surfaces of the hollow support member 16 and the through-flow device 18, as best understood from Figures 3 and 4.

The inflowing fluid causes the through-flow device 18 to rise within the hollow support member 16. As will be understood from Figures 3 and 4, as the guide element 48 of the through-flow device 18 rises, the first variable portion 74 of the first double layer portion 70, initially in contact with the guide element 48, progressively decreases as it rolls around the first fold 78 in the rolling seal 60 and into contact with the outer tubular part 22 of the hollow support member 16, thus progressively increasing the length of the second variable portion 76.

Similarly, as the lower cylindrical portion 44 of the through-flow device 18 rises, the second variable portion 76 of the second double layer portion 72, initially in contact with the inner tubular part 24 of the hollow support member 16, progressively decreases as it rolls around the second fold 82 in the rolling seal 60 and into contact with the lower cylindrical portion 44 of the through-flow device 18, thus progressively increasing the length of the first variable portion 74.

As will be appreciated, the rolling seal 60 does not slide at any point, it simply rolls from one surface to another as relative movement between the hollow support member 16 and the through-flow device 18 occurs.

As the through-flow device 18 rises, the closure operating member 20 also rises, opening the valve 14 of the store and allowing material through the discharge opening. Material thus passes into and through the through-flow device 18, discharging from the material flow outlet 46.

The fluid pumping circuit controls the position, and thus the size of the discharge opening, of the closure device 88, via the closure operating member 20 being connected to the through-flow device 18. The fluid pumping circuit is also designed to rapidly pulse the through-flow device 18, and thus the closure operating member 20, by pulsing the volume of fluid in the chamber 56. This causes the through-flow device 18 and thus the closure device 88 to oscillate about a set position. Pulsing helps to beak up consolidated powders and bridges within the powders and separates the flowing material out around the closure device 88 to promote smooth flow through the annular discharge opening. The non-sliding rolling seal 60 provides frictionless movement of the through-flow device 18, thus allowing greater control and more accurate pulsing to be transmitted to the closure device 88.

The frequency and amplitude of the oscillations can be varied according to the type of powder or other, typically particulate, material being discharged.

One or more, preferably ultrasonic, sensors (not shown) are typically provided to sense and monitor the position of the through-flow device 18, and thus the condition of the closure device 88. It is therefore unlikely that the through-flow device 18 is raised too high, resulting in dislodgement and possible toppling of the store.

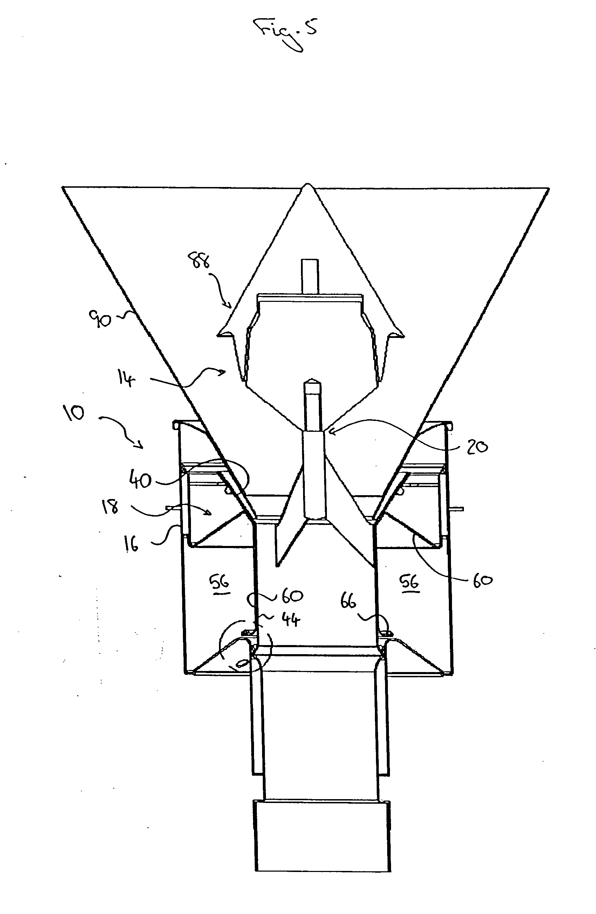

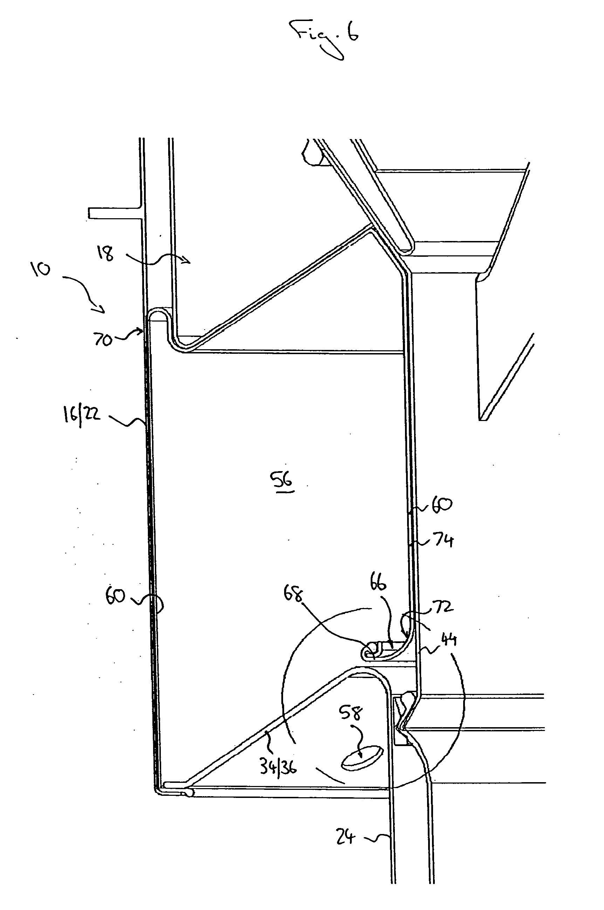

However, referring to Figures 5 and 6, the instance when the through-flow device is raised too far by excessive expansion of the chamber 56, for example, due to a sensor malfunctioning, is now described. In this case, the second variable portion 76 of the second double layer portion 72 rolls completely out of contact with the inner tubular part 24 of the hollow support member 16, due to the rising of the through-flow device 18. The through-flow device 18 draws the slidable ring element 66 upwards as it rises, thus separating the end portion 68 of the rolling seal 60 from the inner tubular part 24 of the hollow support member 16. This allows the chamber 56 to vent down between the inner tubular part 24 and the through-flow device 18. Consequently, the height of the chamber 56 does not increase further if the pumping circuit continues to operate, and the through-flow device 18 does not rise any further.

Once the pumping circuit is controlled to reduce the height of the chamber 56 and thus lower the through-flow device 18, the ring element 66 re-seats on the inner tubular part 24 of the hollow support member 16, re-trapping the end portion 68 of the rolling seal 60, and the second double layer portion 72 reforms as the rolling seal 60 rolls back down into the space between the lower cylindrical portion 44 of the through-flow device 18 and the inner tubular part 24 of the hollow support member 16. The vent means thus automatically closes.

The first and second ends of the rolling seal do not necessarily have to be sealed. It has been shown that the first end of the rolling seal can remain free, since static friction between the rolling seal and the outer tubular part of the hollow support member is sufficient to prevent sliding movement of the rolling seal along the hollow support member, once fluid is pumped into the chamber.

Furthermore, the ring element could be dispensed with. In this case, it is envisaged that the rolling seal would have a thicker or reinforced second end to maintain the correct diameter and thus allow the rolling seal to roll back into the space between the inner tubular part of the hollow member and the lower cylindrical portion, as the through-flow device slides back down from its over-raised state.

It is also envisaged that the rolling seal could be endless, thus extending entirely around the chamber. In this case, the vent means comprising the ring element and the liftable seal edge is dispensed with.

The rolling seal could also be in two parts, one part forming the upper seal boundary between the outer tubular part of the hollow support ember and the guide element, and the other separate part forming the lower seal boundary between the inner tubular part of the hollow support member and the lower cylindrical portion of the through-flow device.

A toroidal rolling seal could also be used in place of the cylindrical rolling seal described above. In this case, one toroidal rolling seal is positioned between and in contact with the outer tubular part of the hollow support member and the guide element of the through-flow device to form the upper seal boundary of the chamber, and another toroidal rolling seal is positioned between and in contact with the inner tubular part of the hollow support member and the lower cylindrical portion of the through-flow device, to form the lower seal boundary of the chamber. As the through-flow device moves, the toroidal rolling seals roll without sliding.

Such toroidal rolling seals are envisaged as being less preferable, since the cylindrical rolling seal described above more easily accommodates manufacturing imperfections and tolerances in the apparatus.

Although the closure operating member is attached to the through-flow device to move therewith, the closure operating member can be moved independently by a separate actuator, or have a delay mechanism.

Furthermore, a second closure device can be provided at the discharge outlet of the through-flow device. The second closure device can be operated independently of movement of the through-flow device, and/or can be operated by or via the actuation means.

It is thus possible to provide apparatus for receiving and controlling the discharge of flowable material from a store, the apparatus having no discrete actuator since the hollow support member and the through-flow device operate in conjunction with the fluid to move the parts. The apparatus also having a rolling seal to prevent leakage of the motive fluid. The rolling seal rolls between surfaces without sliding movement and without requiring inflation. The rolling seal thus allows frictionless movement between sliding parts. Consequently, no abrasion occurs, leading to a significantly longer operational life and less maintenance. It is also possible to provide fail-safe operation, whereby excessive lifting of the through-flow device simply causes the actuator means to vent. The apparatus is automatically reset without dismantling following the fail-safe condition.

The embodiments described above are given by way of examples only, and further modifications will be apparent to persons skilled in the art without departing from the scope of the invention as defined by the appended claims. For example, although fluid leakage would occur, the rolling seal could be dispensed with.

## Claims

1. Apparatus for receiving the discharge of flowable material from a store (12) thereof, the apparatus (10) comprising a hollow support member (16), a through-flow device (18) frictionlessly or substantially frictionlessly slidable within the hollow support member (16) and into which material from the store (12) can flow, and fluid actuation means for moving the through-flow device (18) relative to the hollow support member (16), the fluid actuation means comprising a variable volume chamber (56) into and out of which fluid can flow in order to move the through-flow device (18), and a rolling seal (60) for preventing undesirable escape of the fluid from the variable volume chamber (56) and which rolls without sliding as the through-flow device (18) moves, so that frictionless or substantially frictionless movement of the through-flow device (18) occurs.

2. Apparatus as claimed in claim 1, wherein the rolling seal (60) is positioned between, and rolls along, the hollow support member (16) and the through-flow device (18).

3. Apparatus as claimed in claim 1 or claim 2, wherein the rolling seal (60) has a first variable portion (74) which contacts the hollow support member (16), and a second variable portion (76) which contacts the through-flow device (18), the first variable portion (74) increasing and the second variable portion (76) decreasing as the through-flow device (18) moves upwardly relative to the hollow support member (16), and the first variable portion (74) decreasing and the second variable portion (76) increasing as the through-flow device (18) moves downwardly relative to the hollow support member (16).

4. Apparatus as claimed in any one of the preceding claims, wherein the rolling seal (60) extends at least partially around the variable volume chamber (56) to provide upper and lower seals (80, 84), the upper and lower seals (80, 84) rolling with the through-flow device (18) as it moves.

5. Apparatus as clamed in any one of claims 1 to 3, wherein two said rolling seals are provided spaced from each other, the said two rolling seals forming upper and lower seals respectively, the upper and lower seals in use rolling with the through-flow device (18) as it moves.

6. Apparatus as claimed in any one of the preceding claims, further comprising vent means for venting the variable volume chamber (56) to prevent excessive movement of the through-flow device (18).

7. Apparatus as claimed in claim 6, wherein the vent means includes an end portion of the rolling seal (60) which is separable from a surface of the variable volume chamber (56) to which it seals in normal use, the separating of the end portion (68) of the rolling seal (60) from the sealing surface causing the variable volume chamber (56) to vent.

8. Apparatus (10) as claimed in claim 7, wherein the vent means includes a ring element (66) which is slidably received about the through-flow device (18), an end of the rolling seal (60) forming part of the said end portion (68) being attached to the ring element (66), so that the ring element (66) moves with the through-flow device (18), as the through-flow device (18) reaches a predetermined height, to vent the variable volume chamber (56).

9. Apparatus as claimed in any one of claims 6 to 8, wherein the vent means automatically closes as the through-flow device (18) is lowered relative to the hollow support member (16).

10. Apparatus as claimed in claim 4, wherein the rolling seal (60) extends continuously around the variable volume chamber (56).

11. Apparatus as claimed in claim 1 or claim 2, wherein the rolling seal (60) is toroidal or substantially toroidal.

12. Apparatus for receiving the discharge of flowable material from a store (12) thereof, the apparatus (10) comprising a hollow support member (16), a through-flow device (18) slidable within the hollow support member (16) and into which material from the store (12) can flow, and fluid actuation means for moving the through-flow device (18) frictionlessly or substantially frictionlessly relative to the hollow support member (16), the fluid actuation means comprising a variable volume chamber (56) into and out of which fluid can flow in order to move the through-flow device (18), the variable volume chamber (56) being defined by surfaces of the hollow support member (16) and the through-flow device (18), so that frictionless or substantially frictionless movement of the through-flow device (18) occurs.
